# EUROPÄISCHE PATENTSCHRIFT

(11) **EP 0 654 685 B1**
(45) Veröffentlichungstag und Bekanntmachung des Hinweises auf die Patenterteilung: **29.04.1998**
(21) Anmeldenummer: 94113593.1
(22) Anmeldetag: 31.08.1994
(51) Int. Cl.: G01V 3/10

(54) **Einrichtungen und Verfahren zum Erkennen von Metallgegenständen**
Arrangement and method for detecting metal objects
Dispositif et procédé pour la détection des objets métalliques

(30) Priorität: 18.11.1993 DE 4339419
(43) Veröffentlichungstag der Anmeldung: 24.05.1995
(73) Patentinhaber: Vallon GmbH, D-72800 Eningen (DE)
(72) Erfinder: Keller, Helmut, D-72076 Tübingen (DE)
(74) Vertreter: Klocke, Peter, Dipl.-Ing.

(56) Entgegenhaltungen:
- EP-A- 0 393 387
- DE-U- 8 811 496
- DE-U- 9 300 788
- GB-A- 2 153 077
- US-A- 2 129 058
- US-A- 4 423 377

## Beschreibung

Die vorliegende Erfindung betriffl einen gepulsten Metalldetektor mit einer Sonde für ein Metallsuchgerät mit mindestens einer Sende- und Empfangsspule und einer dafür geeigneten elektronischen Schaltungsanordnung. Ferner betriffl die Erfindung ein Verfahren zum Erkennen von Metallgegenständen bei dem durch Abschalten eines Magnetfelds in dem Gegenstand ein Wirbelstrom induziert und die durch das Abklingen des Wirbelstroms induzierte Spannung erfaßt wird.

Metalldetektoren, mit denen üblicherweise der Erdboden oder sonstige nichtmetallene Medien untersucht werden, bestehen im wesentlichen aus einer flachen Sonde, die eine oder mehrere Suchspulen aufnimmt. In dem Metalldetektor ist außerdem eine Geräteelektronik mit eigener Stromversorgung angeordnet, die beim Auftreten von Metallen akustische oder optische Anzeigesignale erzeugt. Die Suchspule kann dabei aus getrennten Sende- und Empfangsspulen bestehen, die auch zu einer Spule zusammengefaßt sein können.

Bei derartigen Metalldetektoren werden von der Sonde ein elektromagnetisches Wechselfeld oder auch kurze Impulse ausgesandt, die in den metallischen Suchobjekten Wirbelströme induzieren, die ihrerseits ein Sekundärfeld bewirken, welches als Ortungssignal auf die Sonde zurückwirkt.

Bei Metalldetektoren, die nach dem Pulssystem arbeiten, kann erst nach einem bestimmten zeitlichen Abstand nach dem Ausschalten des Sendeimpulses ein von dem Objekt abhängiges Meßsignal erkannt und ausgewertet werden. Dabei wird die Charakteristik des Abklingens des in dem Gegenstand induzierten Wirbelstroms als Meßsignal verwertet. Dabei beeinflussen die Zeitkonstanten der Metallgegenstände die Abklingzeit des Wirbelstroms und damit auch des Meßsignals. Da erst nach einem bestimmten zeitlichen Abstand zum Ausschalten des Sendeimpulses die Abklingcharakteristik meßtechnisch überprüft werden kann, gehen wichtige Meßwerte für Metallgegenstände mit relativ kurzen Zeitkonstanten verloren und werden nicht erfaßt.

Aus der DE 93 00 788.4 U1 ist eine Detektorsonde bekannt, bei der eine außenliegende Sendespule das elektromagnetische Feld aussendet, das von zwei innenliegenden, in Differenz geschalteten Empfangsspulen ausgewertet wird. Die derart ausgestaltete Detektorsonde ist durch die drei erforderlichen Wicklungen für die Spulen relativ schwer. Dafür ist eine gute Anpassung an mineralhaltige Böden gegeben, da die Spulen in Differenz geschaltet sind. Aus dieser Schrift ist grundsätzlich bekannt, eine ringförmige Sonde zu verwenden, wobei eine Hauptspule 3 zwei Nebenspulen 5, 6 einschließt. Schon die Unterteilung in Haupt- und Nebenspule zeigt, daß es sich nicht um eine symmetrische Anordnung der Spulen hinsichtlich Ihrer Funktion als Sendespule und Empfangsspule handelt. Mittels einer entsprechenden Elektronik und Schaltung kann zwischen der Hauptspule als Sendespule und den Nebenspulen als Empfängerspulen gewechselt werden,. Die Aufgabe dieser bekannten Sonde besteht unter anderem darin, eine Verbesserung der Differenzwirkung und Empfindlichkeit der Sonde bei erhöhter Störunterdrückung zu erreichen. Dazu sind insgesamt drei Spulen erforderlich, die oben erwähnte geometrische Anordnung zueinander aufweisen müssen. D1 bezieht sich auf ein sogenanntes Sinusgerät.

Aus der US 4 423 377 ist eine Sonde mit mindestens einer Sende und Empfangsspule bekannte, die zwei nebeneinander angeordnete, im wesentlichen ovale Sende- und Empfangsspulen aufweist, die sich teilweise an den beiden einander zugewandten inneren Längsseiten überlagern und einen zentralen Bereich bilden. Die geometrischen Anordnungen und Abmessungen der Spulen sind dabei so gewählt, daß der Wechselindiktionskoeffizient minimal ist. Es handelt sich dabei um einen kompakten Metalldetektor als Handgerät, der mit mit einem entsprechenden, mit niedriger Spannung arbeitenden Anzeigerschaltkreis versehen ist.

Die US 2 129 058 offenbart ebenfalls eine Sonde mit sich überlagernden, im wesentlichen ovalen Sende und Empfangsspulen wie bei der US 4 423 377. Aus dieser Druckschrift ist eine teilweise Überlappung, allerdings nicht elliptischer Spulen bekannt, wobei wahlweise die eine oder die andere Spule Sende- bzw. Empfangsspule sein kann. Wie aus der Druckschrift in Verbindung mit denr Figuren zu entnehmen ist, bezieht sich die Wahl nur auf den Aufbau nicht auf den Betrieb der Anordnung. Beide Spulen sind nach der Auswahl fest verdrahtet und es findet keine der Spulen zwischen Sende- und Empfangsspule während des Betriebes statt.

Auch die GB 2 153 077 A1 zeigt eine teilweise Spulenüberlappung, jedoch arbeitet diese bekannten Anordnungen ebenfalls nicht nach dem Pulssystem und gibt keinen Hinweis darauf, wie eine Sonde eines gepulsten Metalldetektors aufzubauen ist, um die Schwierigkeiten bei der Detektion von Metallarten in sehr kurzer Zeitkonstante zu überwinden.

Aus dem deutschen Gebrauchsmuster DE 88 11 496 U1 ist eine im wesentlichen ovale Detektorsonde mit geraden Stirnseiten bekannt, bei der eine Spule zugleich als Sendespule und als Empfangsspule dient. Eine derart ausgestaltete Detektorsonde weist eine relativ leichte Spulenkonstruktion auf und erlaubt eine gute genaue Bestimmung bei einzelnen Objekten.

Bei einer anderen bekannten Detektorsonde wird eine innenliegende Empfangsspule zentrisch von einer außenliegenden Sendespule umschlossen. Diese Sondenanordnung erlaubt eine einfache elektronische Schaltung, da die Spulen räumlich voneinander getrennt sind. Gegenüber der vorher erwähnten Sondenanordnung ist mit dieser Sonde eine weniger gute genaue Punktbestimmung von Objekten möglich.

Unabhängig von der oben beschriebenen Spulenform ergeben sich bei den Metalldetektoren, die nach dem Pulssystem arbeiten, Schwierigkeiten bei der Detektion von Metallarten mit sehr kurzer Zeitkonstante.

Der vorliegenden Erfindung liegt daher die Aufgabe zugrunde, eine Lösung vorzuschlagen, bei der die Detektion von Metallarten mit sehr kurzen Zeitkonstanten bei gepulsten Metallsuchsystemen verbessert wird.

Diese Aufgabe wird erfindungsgemäß durch einen gepulsten Metalldetektor gemäß den Merkmalen des Hauptanspruchs gelöst. Ferner umfaßt die Lösung ein Verfahren zum Erkennen von Metallgegenständen gemäß den Merkmalen des Anspruchs 5.

Weitere vorteilhafte Ausgestaltungen sind den jeweiligen abhängigen Ansprüchen zu entnehmen.

Der erfindungsgemäß ausgestaltete gepulste Metalldetektor umfaßt eine elektronische Schaltungsanordnung, die mindestens einen Sendeschaltkreis und einen Empfangsschaltkreis, einen Auswerteschaltkreis mit einer Ausgabeeinheit und einen Steuerschaltkreis umfaßt, wobei jede Spule mit einem Sendeschaltkreis und mit einem Empfangsschaltkreis und der Steuerschaltkreis mit den Sende- und Empfangsschaltkreisen verbunden ist. Dadurch kann jede einzelne Spule als getrennt arbeitender Detektor arbeiten, in dem das einmal ausgesandte Signal wieder empfangen wird. Der Steuerschaltkreis bewirkt eine zyklische Umschaltung der einzelnen Sende- und Empfangsschaltkreise, so daß jede Spule, wie bereits erwähnt, für sich als Sende- und Empfangsspule wirkt, und gleichzeitig die eine Spule als Empfangsspule aktiv ist, wenn die andere Spule sendet. Durch diese Maßnahme ist es möglich, in dem Zeitbereich, in dem der Strom der Sendespule nach Abschalten der Sendespannung auf Null geht, ebenfalls Meßsignale zu empfangen, um auch Metallgegenstände mit einer kurzen Zeitkonstante zu detektieren.

Die verwendete Sonde in dem Metallsuchgerät weist zwei nebeneinander angeordnete, im wesentlichen ovale Sende- und Empfangsspulen auf. Die beiden Sende- und Empfangsspulen sind dabei so angeordnet, daß die sich an den beiden einander zugewandten inneren Längsseiten überlagern und dabei einen zentralen überschneidenden Bereich bilden. Gleichzeitig sind die Längsachsen der Spulen parallel zueinander angeordnet und die Querachsen liegen auf einer Linie. Damit sind die beiden Spulen in dem Sondengehäuse symmetrisch zu dem Mittelpunkt in dem zentralen Bereich angeordnet. Jede einzelne Spule dient als Sende- und dann als Empfangsspule, so daß die Sonde zwei selbständige Detektoren enthält. Wichtig ist, daß der Abstand zwischen den beiden sich überlagernden Längsseiten der Spulen so gewählt ist, daß der Wechselinduktionskoeffizient minimal ist. Dies bedeutet, daß ein von der einen Spulen ausgehendes Magnetfeld in der anderen Spule gerade möglichst keine Spannung induziert. Dieser Abstand ist abhängig von der einzelnen Spulenform und muß daher individuell und experimentell für jede einzelne Spulenform bestimmt werden. In der Praxis wird dabei versucht, möglichst einen Wert zu erreichen, der Null ist oder der nahe bei Null liegt.

Eine derartige Anordnung ermöglicht somit den möglichst ungestörten Betrieb der einzelnen Spulen als Sende- und Empfangsspulen und erlaubt darüberhinaus durch die symmetrische Anordnung Absolutmessungen als auch Differenzmessungen, ohne daß eine dritte Spule zum Feldaubau notwendig ist. Durch entsprechende digitale Verarbeitung kann die Funktion der Spulen in kurzen Zeiten zyklich umgeschalten werden, so daß jede Spule für sich einmal eine Sende- und Empfangsspule bildet, und darüberhinaus jede Spule eine Empfangsspule ist, wenn die benachbarte Spule gerade als Sendespule geschaltet ist. Damit erlaubt die besondere Sondenform auch das Erfassen von Metallgegenständen mit kleiner Zeitkonstante.

Nach dem Abschalten der Spannung zum Zeitpunkt t = 0 in der einen als Sendespule wirkenden Spule schaltet der Steuerschaltkreis die andere Spule als Empfangsspule, bis zum Zeitpunkt t = t₁ der Strom in der Sendespule auf Null abgeklungen ist. Der zugeordnete Auswerteschaltkreis wertet das in diesem Zeitintervall von der anderen als Empfangsspule gemessene Meßspannungssignal als Ausgangssignal aus und gibt dies als akustisches oder optisches Signal über eine Ausgabeeinheit ab.

Für die Zeit t > t₁ bis zu dem Zeitpunkt an dem das Meßspannungssignal abgeklungen ist, schaltet der Steuerschaltkreis die ursprünglich bis zum Zeitpunkt t=0 als Sendespule wirkende Spule als Empfangsspule. Dieser Vorgang wird zyklisch für die eine und dann für die andere Spule durch den Steuerschaltkreis bewirkt. Dadurch gelangen an den Auswerteschaltkreis eine Folge von Meßspannungssignalen, die durch den Fachmann bekannte Einrichtungen analog oder digital weiter verarbeitet werden. Durch Vergleich der von den verschiedenen Empfangsspulen gelieferten Signalen, beispielsweise durch Differenzbildung, Minimumbildung oder dergleichen, kann die Lage des Metallgegenstandes ermittelt und in ein akustisches Signal umgewandelt werden. Wenn der Metallgegenstand sich direkt in der Mitte zwischen den beiden Spulen befindet, wird bei der üblicherweise akustischen Signalausgabe ein maximaler Ton zu hören sein.

Aufgrund der Erfindung ist es somit möglich, Metallgegenstände, die sich genau in der Mitte zwischen den beiden Spulen befinden, sehr genau zu lokalisieren, da die in den beiden in diesem Fall getrennt wirkenden Detektorspulen aus symmetriegründen die gleiche Signalstärke erzeugt wird. Darüberhinaus kann dadurch, daß der Wechselinduktionskoeffizient nahezu Null ist auch in dem Bereich 0 < t < t₁ gemessen werden. Dies ist bei einzelnen Spulen oder Spulen mit einem hohen Wechselinduktionskoeffizienten wegen der durch den Abbau des Sendefelds verursachten Störspannung nicht möglich. Durch die zusätzliche Messung in diesem Zeitbereich wird die Empfindlichkeit für Gegenstände mit kleinen Zeitkonstanten erhöht. Darüberhinaus können Gegenstände, die sowohl einen Abklingeffekt als auch ein Ferritverhalten zeigen, z. B. mineralhaltiges Gestein in bestimmter Konzentration, unterdrückt werden.

Die Erfindung wird nachfolgend in Verbindung mit den begleitenden Zeichnungen näher erläutert.

Es stellen dar:
Figur 1 die Anordnung der beiden Ovalspulen;
Figur 2 a bis c mit verschiedenen Ansichten des Sondengehäuses;
Figur 3 die typischen Verläufe von Strom und Spannung in der Sendespule und die induzierte Spannung in der Meßspule;
Figur 4 a bis c eine Darstellung der verschiedenen Spulenkombinationen als Sende- und/oder Empfangsspule; und
Figur 5 eine prinzipielle Schaltungsanordnung.

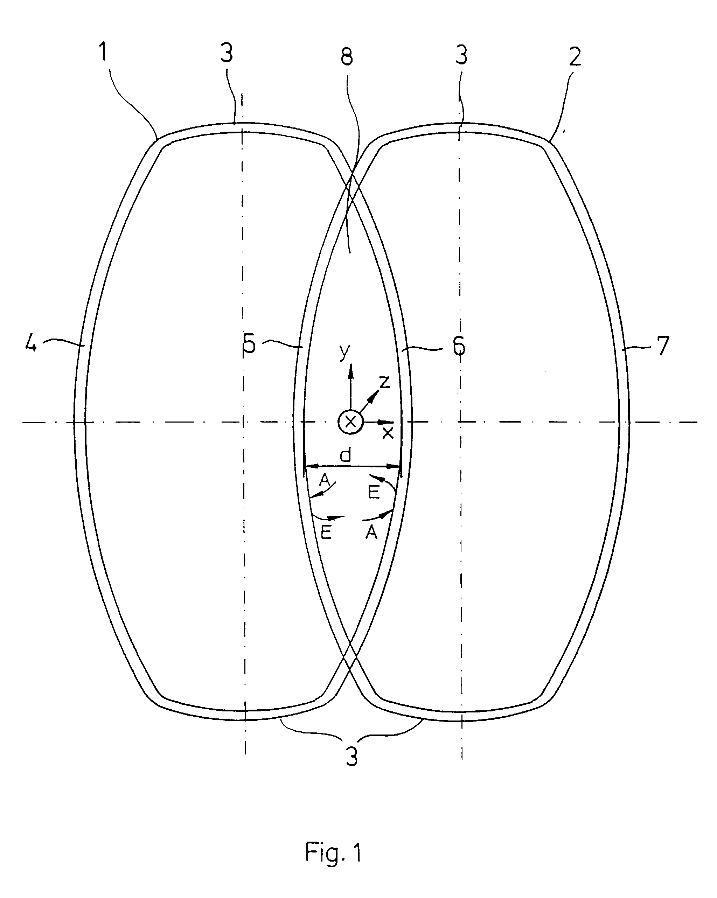

Figur 1 zeigt die Anordnung der im wesentlichen ovalen Spulen 1, 2 zueinander. Die beiden Längsachsen sind parallel zueinander angeordnet und die Querachsen bilden eine Linie. Jede Spule weist abgeflachte Stirnseiten 3 und bogenförmig verlaufende Längsseiten auf, die mit 4, 5 für die Spule 1 und mit 6, 7 für die Spule 2 bezeichnet sind. Die beiden einander zugewandten Längsseiten 5 und 6 der Spule 1 bzw. 2 überschneiden sich und bilden einen zentralen Bereich 8. Die beiden Spulen sind so angeordnet, daß sie symmetrisch zu dem in dem zentralen Bereich 8 dargestellten Koordinatensystem sind. Der Abstand d zwischen den beiden Längsseiten 5 und 6, der die Breite des zentralen Bereichs 8 bestimmt, ist so ausgelegt, daß der Wechselinduktionskoeffizient Null beträgt oder möglichst nahe Null ist. Die Ermittlung des Abstandes d erfolgt im wesentlichen experimentell und ist abhängig von der Ausgestaltung der einzelnen Spulen. Mit den A und E ist das Anfang bzw. das Ende der jeweiligen Spule angegeben.

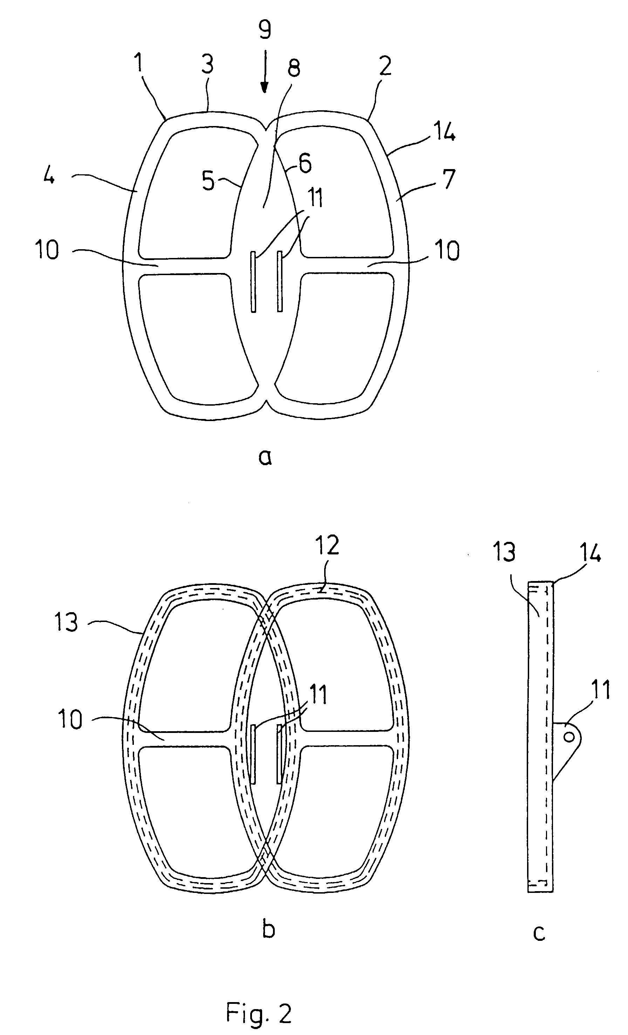

Figur 2a zeigt die Draufsicht auf eine Sonde 9 mit den Spulen 1 und 2, den abgeflachten Stirnseiten 3 sowie den Längsseiten 4, 5, 6 und 7. In der Mitte jeder Spule befindet sich noch ein Quersteg 10, der zusätzlich den zentralen Bereich 8 mit den äußeren Längsseiten 4 und 7 verbindet. In dem zentralen Bereich 8 ist eine Halterung 9 zur Befestigung eines nicht dargestellten Tragrohres vorgesehen. Die Spulen sind in einem Gehäuse 14 aus Kunststoff eingegossen.

Figur 2b zeigt einen Längsschnitt durch die Sonde 9 parallel zur Zeichenebene, aus dem ersichtlich ist, daß der Quersteg 10 jeweils die äußere Längsseite 4, 7 einer Spule mit der inneren Längsseite 5 bzw. 6 der anderen Spule verbindet. Die Wicklungen 12 der einzelnen Spulen 1, 2 sind in einem U-Profilrahmen 13 eingelegt. Durch die Überlagerung der beiden Spulen im Bereich des zentralen Bereichs 8 liegen die Spulen in diesem Bereich nicht in einer Ebene. Es ist jedoch auch denkbar einen entsprechenden U-Profilrahmen zu gestalten, der die vollständige ebene Anordnung der beiden Spulen 1, 2 vorsieht.

Figur 2c zeigt eine Seitenansicht der Sonde 9 mit dem Sondengehäuse 14 und der Halterung 11 für das Tragrohr. Gestrichelt ist der U-Profilrahmen 13 dargestellt.

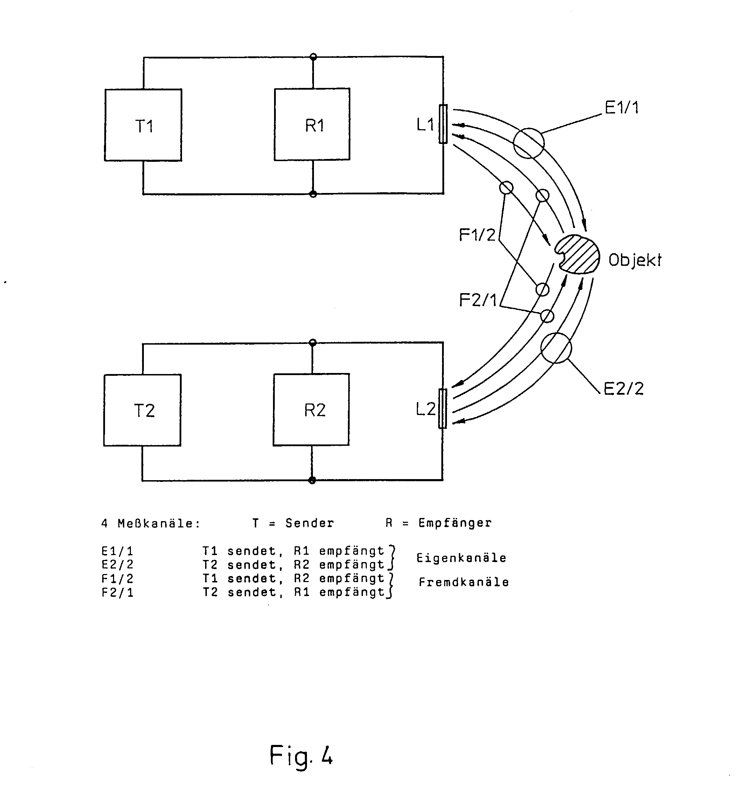

Figur 4 zeigt die prinzipielle Darstellung der möglichen Kombinationen der einzelnen Spulen als Sende- und/oder Empfangsspule. In den Schaltbildern ist der Sender mit T der Empfänger mit R und die Spule mit L bezeichnet. Insgesamt gibt es für die beiden Spulen vier Meßkanäle, wobei zwei Meßkanäle als Eigenkanäle E und zwei Kanäle als Fremdkanäle F bezeichnet werden. Bei den Eigenkanälen sendet der jeweilige Sender T der Spule und der jeweilige Empfänger R empfängt. Bei den Fremdkanälen F sendet der Sender T der einen Spule, während der Empfänger R der anderen Spule empfängt.

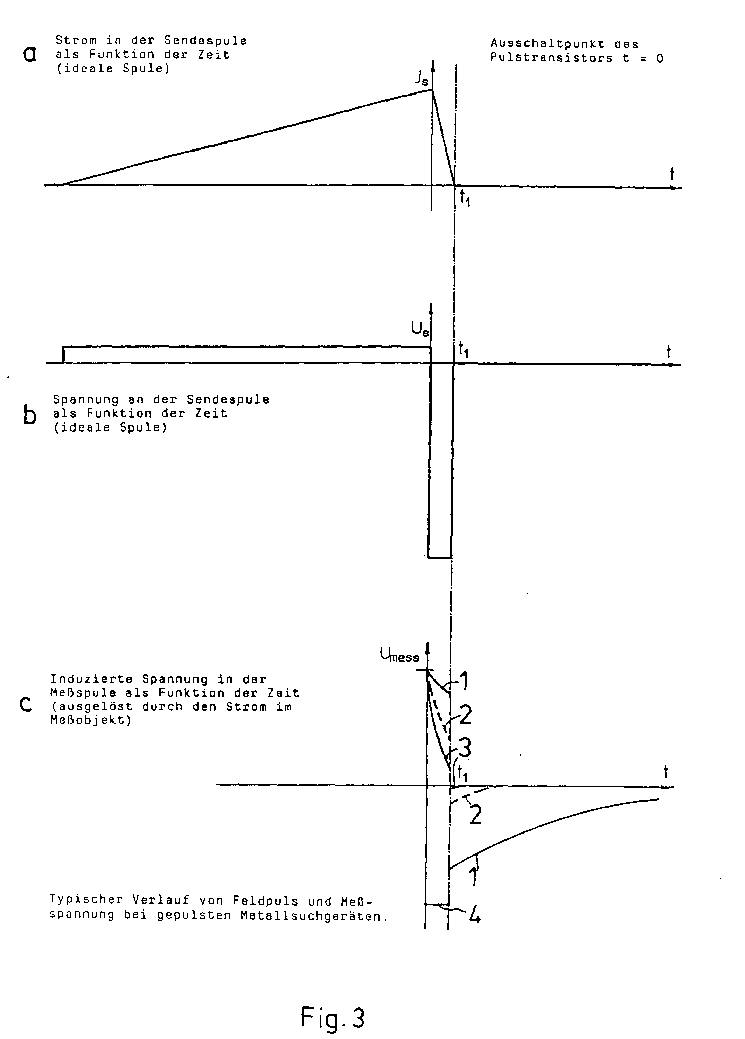

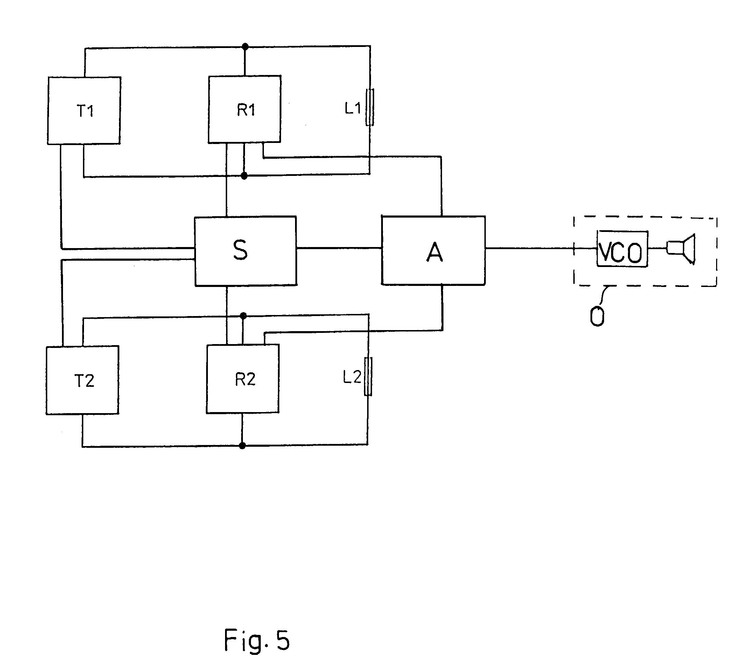

Figur 3 zeigt die zeitlichen Verläufe des Stroms (a) und der Spannung (b) in der Sendespule sowie die induzierte Spannung in der Meßspule (c) in Relation zueinander. Es handelt sich dabei um idielle typische Verläufe. Zu einem Zeitpunkt t = 0 wird der Strom in der Sendespule abgeschaltet, so daß dieser aufgrund der Induktivität bis zum Zeitpunkt t = t₁ auf Null zurückgeht. Da die Spannung U_{S} an der Sendespule sich aus dI/dt ergibt springt die Spannung auf einen negativen Wert bis zum Zeitpunkt t = t₁ an dem sie ebenfalls wie der Strom I_{S} zu Null wird. Die induzierte Spannung in der Meßspule, die durch das Meßobjekt ausgelöst wird, ergibt sich aus der ersten Ableitung der in dem Meßobjekt induzierten Ströme. Die in dem Diagramm dargestellte Spannung Uₘₑₛₛ zeigt die Verläufe bis zum Zeitpunkt t₁ verschiedene Zeitkonstanten. Bis zum Zeitpunkt t = t₁ steigt der Strom in dem Meßobjekt in Abhängigkeit von der jeweiligen Objektabhängigen Zeitkonstante mit einer (1 - e)-Funktion an, um dann zum Zeitpunkt t = t₁ mit einer e-Funktion abzunehmen. Infolgedessen erfolgt bei der Meßspannung Uₘₑₛₛ zum Zeitpunkt t = t₁ ein Sprung. Die einzelnen einander zugeordneten Verläufe sind mit den Bezugszahlen 1 bis 4 gekennzeichnet. Aus dem Diagramm ist ersichtlich, daß Materialien mit einer kleinen Zeitkonstante bei einer Messung, die erst zum Zeitpunkt t = t₁ beginnt, nicht mehr sinnvoll erfaßt werden können. Entsprechendes gilt für ferritähnliches Material, dessen Verlauf in dem Diagramm mit 4 bezeichnet ist. Dieser Meßspannungsverlauf springt zum Zeitpunkt t = t₁ auf Null, so daß die Erfassung nicht möglich ist. Durch die Verwendung der anderen Spule als Empfangsspule für den Bereich Null < t < t₁ ist es gemäß der vorliegenden Erfindung möglich, auch in diesem Bereich ein auswertbares Meßsignal Uₘₑₛₛ zu erhalten, so daß Materialien mit kleiner Zeitkonstante erfaßt werden können. Figur 5 zeigt einen prinzipiellen Schaltkreis mit den Sendern T₁ und T₂ den Empfängern R₁, R₂ und den zugehörigen Spulen L₁ und L₂ die zueinander parallel geschaltet sind. Zusätzlich zeigt das Schaltbild eine Steuerschaltung S, einen Auswerteschaltkreis A und eine Ausgabeeinheit O. Die Steuerschaltung ist mit den Sendeschaltkreisen T₁, T₂ und Empfangsschaltkreisen R₁ und R₂ sowie der Auswerteschaltung A verbunden. Zusätzlich sind die Empfangsschaltkreise R₁, R₂ mit dem Auswerteschaltkreis A zur Übertragung des empfangenen Signals verbunden. Die Ausgabeeinheit O, die im wesentlichen einen spannungsgesteuerten Oszillator VCO sowie einen Lautsprecher umfaßt, ist mit dem Auswerteschaltkreis A verbunden.

Der Steuerschaltkreis S schaltet zyklisch die Sendeschaltkreise T₁, T₂ die Empfangsschaltkreise R₁, R₂ sowie den Auswerteschaltkreis A, so daß bei Eigenkanalbetrieb der Empfangsschaltkreis R₁ bzw. R₂ von dem Sendeschaltkreis T₁ bzw. T₂ ausgesandte Signale, und bei Fremdkanalbetrieb der Empfangsschaltkreis R₁, R₂ vom Sendeschaltkreis T₂ bzw. T₁ ausgesandte Signale empfängt. Die Auswerteschaltung wertet, durch die Steuerschaltung beinflusst, die entsprechenden empfangenen Signale in einer dem Fachmann geläufigen Art und Weise, beispielsweise durch Differenzbildung oder Minimumbildung, aus und liefert ein ensprechendes Signal an die Ausgabeeinheit O. Dort wird das Signal akkustisch und/oder optisch ausgegeben.

## Patentansprüche

1. Gepulster Metalldetektor mit einer Sonde mit mindestens einer Sende- und Empfangsspule und einer elektronischen Schaltungsanordnung, die mindestens einen Sendeschaltkreis und einen Empfangsschaltkreis, einen Auswerteschaltkreis mit einer Ausgabeeinheit und einen Steuerschaltkreis umfaßt, **dadurch gekennzeichnet,** daß die Sonde zwei nebeneinander angeordnete, im wesentlichen ovale Sende- und Empfangsspulen (1, 2, L₁, L₂) aufweist, die sich teilweise an den beiden einander zugewandten inneren Längsseiten (5, 6) überlagern und einen zentralen Bereich (8) bilden, wobei die Längsachsen der Spulen (1, 2) parallel zueinander verlaufen und die Querachsen auf einer Linie liegen, und der Abstand (d) zwischen den beiden sich überlagernden Längsseiten (5, 6) der Spulen (1, 2) so gewählt ist, daß der Wechselinduktionskoeffizient minimal ist, und jede Spule (L₁, L₂) mit einem Sendeschaltkreis (T₁, T₂) und mit einem Empfangsschaltkreis (R₁, R₂) und der Steuerschaltkreis (S) mit den Sende- und Empfangsschaltkreisen verbunden ist, wobei der Steuerschaltkreis die Sende- und Empfangsschaltkreise zyklisch umschaltet, so daß jede Spule für sich als Sende- und Empfangsspule wirkt und gleichzeitig die eine Spule (L₁, L₂) als Empfangsspule aktiv ist, wenn die andere Spule (L₂, L₁) sendet.

2. Gepulster Metalldetektor nach Anspruch 1, **dadurch gekennzeichnet,** daß der Steuerschaltkreis (S) nach dem Abschalten des Stroms zum Zeitpunkt t = 0 in der einen als Sendespule wirkenden Spule die andere Spule bis zum Zeitpunkt t = t₁, an dem der Strom in der Sendespule auf Null abgeklungen ist, als Empfangsspule schaltet, und der Auswerteschaltkreis (A) das in diesem Zeitintervall gemessene Meßspannungssignal (Uₘₑₛₛ) als Ausgangssignal an die Ausgabeeinheit (O) abgibt.

3. Gepulster Metalldetektor nach Anspruch 2, **dadurch gekennzeichnet,** daß der Steuerschaltkreis (S) für die Zeit t > t₁ bis zu dem Zeitpunkt an dem das Meßsignal abgeklungen ist, die bis zum Zeitpunkt t = 0 als Sendespule wirkende Spule als Empfangsspule schaltet.

4. Gepulster Metalldetektor nach Anspruch 3, **dadurch gekennzeichnet,** daß der Auswerteschaltkreis (A) durch den Vergleich aus den abwechselnd von den beiden Spulen gelieferten Signalen ein Ausgangssignal für die Ausgabeeinheit (O) ermittelt.

5. Verfahren zum Erkennen von Metallgegenständen, bei dem durch Abschalten eines Magnetfelds in dem Gegenstand ein Wirbelstrom induziert und die durch das Abklingen des Wirbelstromes induzierte Spannung erfaßt wird, **dadurch gekennzeichnet**, daß unter Verwendung einer Sonde mit mindestens einer Sende- und Empfangsspule, die zwei nebeneinander angeordnete, im wesentlichen ovale Sende- und Empfangsspulen (1, 2) aufweist, die sich teilweise an den beiden einander zugewandten inneren Längsseiten (5, 6) überlagern und einen zentralen Bereich (8) bilden, wobei die Längsachsen der Spulen (1, 2) parallel zueinander verlaufen und die Querachsen auf einer Linie liegen, und der Abstand (d) zwischen den beiden sich überlagernden Längsseiten (5, 6) der Spulen (1, 2) so gewählt ist, daß der Wechselinduktionskoeffizient minimal ist, die Spulen zyklisch umgeschaltet werden, so daß jede Spule als getrennter Detektor mit einer Spule, die sowohl als Sendespule als auch als Empfangsspule dient, wirkt, und gleichzeitig die eine Spule als Empfangsspule aktiv ist, wenn die andere Spule sendet.

6. Verfahren nach Anspruch 5, **dadurch gekennzeichnet,** daß nach dem Abschalten der Spannung der einen sendenden Spule zum Zeitpunkt t = 0 bis zum Zeitpunkt t = t₁, an dem der Strom in dieser Spule auf Null abgesunken ist, die andere Spule als Empfangsspule betrieben wird.

7. Verfahren nach Anspruch 6, **dadurch gekennzeichnet,** daß für die Zeit t > t₁ bis zu dem Zeitpunkt, an dem die induzierte Spannung abgeklungen ist, die bis zum Zeitpunkt t = 0 als Sendespule wirkende Spule als Empfangsspule betrieben wird.

8. Verfahren nach Anspruch 7, **dadurch gekennzeichnet,** daß aus den abwechselnd von den Spulen gemessenen induzierten Spannungen durch Vergleich ein Ausgabesignal ermittelt wird.

## Claims

1. A pulsed metal detector with a sensor with at least one transmitting and receiving coil and an electronic circuit arrangement comprising at least one transmitting circuit and a receiving circuit, an evaluation circuit with an output unit and a control circuit, **characterised in that** the sensor comprises two essentially oval transmitting and receiving coils (1, 2, L₁, L₂), arranged side-by-side; the said transmitting and receiving coils partially overlap at the two interior longitudinal sides (5, 6) facing each other, and form a central area (8), with the longitudinal axes of the coils (1, 2) aligned parallel to each other, and the transverse axes in line; with the distance (d) between the two overlapping longitudinal sides (5, 6) of the coils (1, 2) being selected in such a way that the mutual induction coefficient is minimal; and each coil (L₁, L₂) being connected to a transmitting circuit (T₁, T₂) and with a receiving circuit (R₁, R₂), and the control circuit (S) being connected to the transmitting and receiving circuits; with the control circuit cyclically switching the transmitting and receiving circuits so that each coil per se acts as a transmitting and receiving coil and at the same time the one coil (L₁, L₂) is active as a receiving coil, when the other coil (L₂, L₁) is transmitting.

2. A pulsed metal detector according to claim 1, **characterised in that** the control circuit (S) after switching off the power at the point in time t=0 in the one coil acting as a transmitting coil, by the point in time t=t₁ at which the power in the transmitting coil has decayed to zero, switches the other coil to become a receiving coil, and the evaluation circuit (A) emits the measurement voltage signal (Uₘₑₐₛ) measured during this time interval, as an output signal to the output unit (O).

3. A pulsed metal detector according to claim 2, **characterised in that** for the time t>t₁ to the point in time when the measuring signal has decayed, the control circuit (S) switches the coil acting as a transmitting coil until point in time t=0, to become a receiving coil.

4. A pulsed metal detector according to claim 3, **characterised in that** by comparing the signals produced in turn by the two coils, the evaluation circuit (A) determines an output signal for the output unit (O).

5. A method for detecting metal objects in which, by switching off a magnetic field in the object, an eddy current is inducted and the voltage inducted by the decay of the eddy current, is acquired, **characterised in that** by using a sensor with at least one transmitting and receiving coil, comprising two essentially oval transmitting and receiving coils (1, 2) arranged side-by-side, which partly overlap on the two interior longitudinal sides (5, 6) facing each other, and form a central area (8), wherein the longitudinal axes of the coils (1, 2) are aligned parallel to each other and the transverse axes are in line, and the distance (d) between the two overlapping longitudinal sides (5, 6) of the coils (1, 2) is selected in such a way that the mutual induction coefficient is minimal, the coils are cyclically switched so that each coil serves as a separate detector with one coil, serving both as a transmitting coil and a receiving coil, and at the same time the one coil is active as a receiving coil when the other coil is transmitting.

6. A method according to claim 5, **characterised in that** after switching off the voltage of the one transmitting coil at the point in time t=0, until the point in time t=t₁, in which the power in this coil has dropped to zero, the other coil is operated as a receiving coil.

7. A method according to claim 6, **characterised in that** for the time t>t₁ to the time in which the induced voltage has decayed, the coil which has been acting as the transmitting coil until the time t=0, is acting as the receiving coil.

8. A method according to claim 7, **characterised in that** from the inducted voltages measured alternately from the coils, an output signal is determined by comparison.

## Revendications

1. Détecteur de métal à impulsions comprenant une sonde équipée au moins d'une bobine émettrice et réceptrice et d'un dispositif de commutation électronique comprenant au moins un circuit de commutation pour émission et un circuit de commutation pour réception, un circuit de commutation pour interprétation avec une unité de sortie, et un circuit de commande, **caractérisé par le fait** que la sonde présente deux bobines émettrices et réceptrices (1, 2, L₁, L₂), de forme essentiellement ovale et juxtaposées et qui se superposent en partie aux deux côtés longitudinaux intérieurs (5, 6) qui se font face et constituent une zone centrale (8), les axes longitudinaux des bobines (1, 2) étant parallèles entre eux et les axes transversaux sur une même ligne, l'intervalle (d) entre les deux côtés longitudinaux des bobines (1, 2), qui se superposent (5, 6), étant choisi de telle sorte que le coefficient d'induction alternative soit minimal, que chaque bobine (L₁, L₂), soit reliée à un circuit de commutation pour émission (T₁, T₂) et à un circuit de commutation pour réception (R₁, R₂) et le circuit de commande (S) aux circuits de commutation pour émission et pour réception, le circuit de commande commutant les circuits de commutation pour émission et réception de façon cyclique, ce qui permet à chaque bobine de fonctionner individuellement comme bobine émettrice et comme bobine réceptrice, une bobine (L₁, L₂) fonctionnant comme bobine réceptrice quand, dans le même temps, l'autre bobine (L₂, L₁) émet.

2. Détecteur de métal à impulsions selon la revendication 1, **caractérisé par le fait** qu'après interruption du courant au moment t = 0 dans l'une des bobines fonctionnant comme bobine émettrice, le circuit de commande (S) commute l'autre bobine en bobine réceptrice jusqu'au moment t =t₁ où le courant est tombé à zéro dans la bobine émettrice, et que le circuit de commutation pour interprétation (A) fournit à l'unité de sortie (O), comme signal de sortie, le signal de tension de mesure (Uₘₑₛₛ), mesuré dans cet intervalle de temps.

3. Détecteur de métal à impulsions selon la revendication 2, **caractérisé par le fait** que, pour le temps t> t₁ et jusqu'au moment où le signal de mesure cesse, le circuit de commande (S) commute en bobine réceptrice la bobine qui fonctionnait comme bobine émettrice jusqu'au moment T= 0.

4. Détecteur de métal à impulsions selon la revendication 3, **caractérisé par le fait** que le circuit de commutation pour interprétation (A) établit un signal de sortie pour l'unité de sortie (O) par comparaison des signaux fournis alternativement par les deux bobines.

5. Procédé pour la détection des objets métalliques, par lequel un courant de Foucault est induit dans l'objet par interruption d'un champ magnétique, et la tension induite par l'arrêt du courant de Foucault est enregistrée, **caractérisé par le fait** qu'en utilisant une sonde comprenant au moins une bobine émettrice et réceptrice présentant deux bobines émettrice et réceptrice ( 1, 2). de forme essentiellement ovale et qui se superposent en partie aux deux côtés longitudinaux internes (5, 6) se faisant face, et constituent une zone centrale (8), les axes longitudinaux des bobines (1, 2) étant parallèles entre eux et les axes transversaux sur une même ligne, l'intervalle (d) entre les deux côtés longitudinaux des bobines (1, 2), qui se superposent (5, 6), étant choisi de telle sorte que le coefficient d'induction alternative soit minimal, les bobines commutées de façon cyclique, de sorte que chaque bobine fonctionne comme détecteur séparé, avec une bobine servant aussi bien de bobine émettrice que de bobine réceptrice, alors que simultanément une bobine est active comme bobine réceptrice pendant que l'autre bobine émet.

6. Procédé selon la revendication 5, **caractérisé par le fait** qu'après interruption de la tension d'une bobine émettrice au moment t = 0 jusqu'au moment t = t₁, où le courant induit dans cette bobine est tombé à zéro, l'autre bobine fonctionne comme bobine réceptrice.

7. Procédé selon la revendication 6, **caractérisé par le fait** que la bobine fonctionnant comme bobine émettrice jusqu'au moment t = 0, fonctionne comme bobine réceptrice pendant le temps t>t₁ jusqu'au moment où la tension induite est tombée à zéro.

8. Procédé selon la revendication 7, **caractérisé par le fait** que la comparaison des mesures des tensions induites alternativement par les bobines détermine un signal de sortie.
